(19) Europäisches Patentamt
European Patent Office
Office européen des brevets

(11) EP 1 956 047 A1

(12) **EUROPEAN PATENT APPLICATION**
published in accordance with Art. 158(3) EPC

(43) Date of publication:
**13.08.2008 Bulletin 2008/33**

(21) Application number: **06833214.7**

(22) Date of filing: **24.11.2006**

(51) Int Cl.:
***C08L 69/00*** *(2006.01)*

(86) International application number:
**PCT/JP2006/323410**

(87) International publication number:
**WO 2007/061038 (31.05.2007 Gazette 2007/22)**

(84) Designated Contracting States:
**DE**

(30) Priority: **28.11.2005 JP 2005342570**

(71) Applicant: **MITSUBISHI ENGINEERING-PLASTICS CORPORATION**
**Tokyo 104-0031 (JP)**

(72) Inventors:
- **OGAWA, Yasushi**
  **Hiratsuka-shi, Kanagawa 254-0016 (JP)**
- **MASUKI, Tatsuya**
  **Hiratsuka-shi, Kanagawa 254-0016 (JP)**

(74) Representative: **HOFFMANN EITLE**
**Patent- und Rechtsanwälte**
**Arabellastrasse 4**
**81925 München (DE)**

# (54) AROMATIC POLYCARBONATE RESIN COMPOSITION AND MOLDED ARTICLE THEREOF

(57) The present invention provides an aromatic polycarbonate resin composition having excellent surface impact strength and flame retardancy which is suitable for production of thin-wall molded products, as well as a molded product produced from the composition.

The aromatic polycarbonate resin composition comprises:
100 parts by weight of a mixture comprising 60 to 90% by weight of an aromatic polycarbonate resin (a), 10 to 40% by weight of a rubber polymer/aromatic vinyl/cyanided vinyl-based copolymer (b-1) and 0 to 35% by weight of an aromatic vinyl/cyanided vinyl-based copolymer(b-2);
10 to 40 parts by weight of (c) a phosphorus-based flame retardant;
0 to 5 parts by weight of (d) a fluorinated polyolefin; and
0 to 50 parts by weight of an inorganic filler (e),
a content of the rubber polymer component being 31 to 50% by weight on the basis of a total amount of the components (b-1) and (b-2), and which aromatic polycarbonate resin composition has such a property that an injection-molded product obtained from the aromatic polycarbonate resin composition satisfies the following relational formula (1):

$$Cpf/Cpc < 2 \qquad (1)$$

wherein Cpf is a notched Charpy impact strength in a direction parallel with a flow direction of the resin composition; and Cpc is a notched Charpy impact strength in a direction perpendicular to a flow direction of the resin composition as measured according to JIS K7111.

EP 1 956 047 A1

## Description

### TECHNICAL FIELD

The present invention relates to an aromatic polycarbonate resin composition and a molded product produced therefrom, and more particularly to an aromatic polycarbonate resin composition having excellent surface impact strength and flame retardancy which is suitable for production of thin-wall molded products, and a molded product produced therefrom.

### BACKGROUND ART

Conventionally, polycarbonate resins have been used as raw materials in extensive industrial application fields such as automobiles, OA equipments and electric and electronic equipments because of excellent mechanical properties thereof. However, the polycarbonate resins have drawbacks such as high melt viscosity, poor fluidity and large thickness-dependency of impact strength. In order to ensure a good fluidity of the polycarbonate resins, there are known the method of using polycarbonates having a low molecular weight, the method of blending various fluidity modifiers in the polycarbonate resins, etc. In any of these conventional methods, although the effect of improving a fluidity of the polycarbonate resins is attained, there still occur problems such as sacrifice of impact strength inherent to the polycarbonate resins and poor chemical resistance. Under these circumstances, for example, an acrylonitrile/butadiene/styrene-based copolymer (ABS resin) is blended in the polycarbonate resins in order to overcome these problems.

Thermoplastic resin compositions composed of a polycarbonate resin and an ABS-based resin have been recently used for large molded products such as OA equipments as well as for small molded products such as personal computer housings and potable terminal equipments. These products have been required year by year to have a reduced wall thickness for the purposes of reduction in weight, enhancement in performance, etc. However, the conventional thermoplastic resin compositions tend to be deteriorated in practical impact strength (for example, surface impact property) when formed into thin-wall molded products, thereby causing problems such as occurrence of cracks on the products. In addition, when adding a flame retardant to the resin compositions for the purpose of imparting a flame retardancy thereto, the products produced therefrom also tend to undergo deterioration in strength thereof. In the case where the amount of the flame retardant added is small or the content of the aromatic polycarbonate resin in the compositions is large, although the impact property of the compositions is improved, the compositions tend to suffer from problems such as insufficient flame retardancy or fluidity. Thus, when using the conventional thermoplastic resin compositions, it has been difficult to obtain thin-wall molded products capable of exhibiting a desired flame retardancy and retaining other useful properties.

There have been proposed the flame-proofing polycarbonate resin composition having an improved impact resistance which contains a polycarbonate, a rubber-modified vinyl (co)polymer and a flame proofing agent as main components and has a rubber content of 2 to 6% by weight based on a total amount of the composition (Japanese Patent Application Laid-open (TOKUHYO) No. 2005-507445), and the polycarbonate resin composition which is improved in flame retardancy and impact property by introducing a specific inorganic additive thereinto (Japanese Patent Application Laid-open (KOKAI) No. 11-199768). However, in these conventional polycarbonate resin compositions, there tends to arise such a problem that the resin compositions are deteriorated in impact strength in specific directions owing to influence of dispersion or orientation of domains formed by the ABS resin. Further, the above proposals have failed to specify an impact strength of actual thin-wall molded products such as surface impact property.

### DISCLOSURE OF THE INVENTION

### PROBLEM TO BE SOLVED BY THE INVENTION

As a result of the present inventors' earnest study for overcoming the above conventional problems, it has been found that when the aromatic polycarbonate resin is blended with a specific amount of an aromatic vinyl/cyanided vinyl-based copolymer having a rubber polymer content of 31 to 50% by weight, there can be provided such an aromatic polycarbonate resin composition capable of not only retaining excellent moldability upon production of thin-wall molded products and excellent flame retardancy, but also producing an actual molded product whose thin-wall portions exhibit an excellent surface impact strength; as well as a molded product produced therefrom. The present invention has been attained on the basis of the above finding.

### MEANS FOR SOLVING THE PROBLEM

Namely, to accomplish the aims, in a first aspect of the present invention, there is provided an aromatic polycarbonate resin composition comprising:
100 parts by weight of a mixture comprising 60 to 90% by weight of an aromatic polycarbonate resin (a), 10 to 40% by weight of a rubber polymer/aromatic vinyl/cyanided vinyl-based copolymer (b-1) and 0 to 35% by weight of an aromatic vinyl/cyanided vinyl-based copolymer(b-2);
10 to 40 parts by weight of (c) a phosphorus-based flame retardant;
0 to 5 parts by weight of (d) a fluorinated polyolefin; and
0 to 50 parts by weight of an inorganic filler (e),
a content of the rubber polymer component being 31 to 50% by weight on the basis of a total amount of the components (b-1) and (b-2), and which aromatic polycarbonate resin composition has such a property that an injection-molded product obtained from the aromatic polycarbonate resin composition satisfies the following relational formula (1):

$$Cpf/Cpc < 2 \qquad (1)$$

wherein Cpf is a notched Charpy impact strength in a direction parallel with a flow direction of the resin composition; and Cpc is a notched Charpy impact strength in a direction perpendicular to a flow direction of the resin composition as measured according to JIS K7111. In a second aspect of the present invention, there is provided a molded product obtained by injection-molding the above aromatic polycarbonate resin composition.

## EFFECT OF THE INVENTION

The aromatic polycarbonate resin composition of the present invention maintains a good flame retardancy and allows a molded product obtained therefrom to exhibit an excellent surface impact property at its thin-wall portions as compared to conventional flame-retardant aromatic polycarbonate resin compositions, and, therefore, can be suitably used for production of thin-wall flame-retardant molded products such as, for example, parts or housings for personal computers, televisions, printers, electronic pocketbooks, cameras, video cameras, cellular phones, office equipments, etc.

## PREFERRED EMBODIMENTS FOR CARRYING OUT THE INVENTION

The present invention is described in detail below. The aromatic polycarbonate resin composition of the present invention is formed by blending an aromatic polycarbonate resin (a), a rubber polymer/aromatic vinyl/cyanided vinyl-based copolymer (b-1), an aromatic vinyl/cyanided vinyl-based copolymer(b-2), (c) a phosphorus-based flame retardant, (d) a fluorinated polyolefin, and an inorganic filler (e) wherein the components (b-2), (d) and (e) are not essential but optional components.
First, the respective components described above are explained.

### Aromatic polycarbonate resin (a):

Examples of the aromatic polycarbonate resin (a) used in the present invention may include branched or unbranched thermoplastic polymers or copolymers which are produced by reacting an aromatic dihydroxy compound or a mixture of the aromatic dihydroxy compound and a small amount of a polyhydroxy compound with phosgene or a carbonic diester.
The method of producing the aromatic polycarbonate resin (a) is not particularly limited, and the aromatic polycarbonate resin may be produced by conventionally known methods such as a phosgene method (interfacial polymerization method) and a melting method (transesterification method). Alternatively, the aromatic polycarbonate resin may also be produced by suitably controlling an amount of OH end groups of the resin produced by the melting method.
Examples of the aromatic dihydroxy compound may include 2,2-bis(4-hydroxyphenyl)propane (alias: bisphenol A), tetramethyl bisphenol A, bis(4-hydroxyphenyl)-p-diisopropyl benzene, hydroquinone, resorcinol, 4,4-dihydroxydiphenyl, etc. Among these aromatic dihydroxy compounds, preferred is bisphenol A. In addition, as the aromatic dihydroxy compound, there may also be used those compounds to which one or more tetraalkyl phosphonium sulfonate groups are bonded.
The branched aromatic polycarbonate resin may be obtained by replacing a part of the above aromatic dihydroxy compound with a polyhydroxy compound such as fluoroglucin, 4,6-dimethyl-2,4,6-tri(4-hydroxyphenyl)heptene-2, 4,6-dimethyl-2,4,6-tri(4-hydroxyphenyl)heptane, 2,6-dimethyl-2,4,6-tri(4-hydroxyphenyl)heptene-3, 1,3,5-tri(4-hydroxyphenyl)benzene and 1,1,1-tri(4-hydroxyphenyl)ethane, or 3,3-bis(4-hydroxyaryl)oxyindole (alias: isatin bisphenol), 5-chloroisatin, 5,7-dichloroisatin, 5-bromoisatin, etc. The amount of the polyhydroxy compound or the like which is used for replacing a part of the aromatic dihydroxy compound is usually 0.01 to 10 mol% and preferably 0.1 to 2 mol% on the basis of the aromatic dihydroxy compound.

In order to control a molecular weight of the aromatic polycarbonate resin, there may be used monovalent aromatic hydroxy compounds. Examples of the monovalent aromatic hydroxy compounds may include aromatic monohydroxy compounds such as m- and p-methyl phenols, m- and p-propyl phenols, p-tert-butyl phenol and p-long chain alkyl-substituted phenols, etc.

As the aromatic polycarbonate resin, there may be preferably used aromatic polycarbonate resins derived from 2,2-bis(4-hydroxyphenyl)propane, or aromatic polycarbonate copolymers derived from 2,2-bis(4-hydroxyphenyl)propane and the other aromatic dihydroxy compound. The aromatic polycarbonate resin may also be obtained by copolymerizing these compounds with a polymer or oligomer having a siloxane structure. These aromatic polycarbonate resins may also be used in combination of any two or more thereof.

The molecular weight of the aromatic polycarbonate resin may be determined as a viscosity-average molecular weight thereof in terms of a solution viscosity as measured at 25°C in methylene chloride as a solvent. The viscosity-average molecular weight is usually 16,000 to 30,000 and preferably 18,000 to 28,000. When the viscosity-average molecular weight of the aromatic polycarbonate resin is too large, the resultant composition tends to be deteriorated in fluidity, whereas when the viscosity-average molecular weight thereof is too small, the resultant composition tends to be insufficient in impact strength. Also, two or more kinds of aromatic polycarbonate resins whose viscosity-average molecular weights are different from each other may be used in the form of a mixture thereof. In this case, aromatic polycarbonate resins whose viscosity-average molecular weights are out of the above-specified range may be blended in the mixture.

Rubber polymer/aromatic vinyl/cyanided vinyl-based copolymer (b-1):

The rubber polymer/aromatic vinyl/cyanided vinyl-based copolymer (b-1) used in the present invention is produced by polymerizing at least an aromatic vinyl-based monomer and a cyanided vinyl-based monomer, if required, further copolymerizing these monomers with the other monomer copolymerizable with the respective monomers, in the presence of a rubber polymer. The component (b-1) is not particularly limited to those graft copolymers obtained by graft-copolymerizing all of the above two or more kinds of monomers to the rubber component. As the method of producing these copolymers, there may be used conventionally known methods such as an emulsion polymerization method, a solution polymerization method, a bulk polymerization method and a suspension polymerization method.

The rubber polymer component contained in the above component (b-1) is not particularly limited as long as it comprises a polymer exhibiting a rubber-like property. Examples of the rubber polymer may include diene-based rubbers, acrylic rubbers, ethylene/propylene rubbers, silicone rubbers, polyurethane rubbers, etc. Among these rubber polymers, from the standpoint of a good balance between properties and costs, preferred are diene-based rubbers and acrylic rubbers.

Examples of the diene-based rubbers may include polybutadiene, polyisoprene, butadiene/styrene copolymers, butadiene/acrylonitrile copolymers, butadiene/lower-alkyl (meth)acrylate copolymers, butadiene/styrene/lower-alkyl (meth)acrylate copolymers, etc. Specific examples of the lower-alkyl (meth)acrylate may include methyl acrylate, ethyl acrylate, methyl methacrylate, ethyl methacrylate, etc. The content of the lower-alkyl (meth)acrylate in the butadiene/lower-alkyl (meth)acrylate copolymers and the butadiene/styrene/lower-alkyl (meth)acrylate copolymers is preferably not more than 30% by weight on the basis of the weight of the respective rubber components.

On the other hand, examples of the acrylic rubbers may include alkyl acrylate rubbers. The alkyl group contained in the alkyl acrylate rubbers usually has 1 to 8 carbon atoms. Specific examples of the alkyl acrylate rubbers may include ethyl acrylate, butyl acrylate, ethylhexyl acrylate, etc. The alkyl acrylate rubbers may contain a crosslinkable ethylenically unsaturated monomer (crosslinking agent). Examples of the crosslinking agent may include alkylene diol di(meth)acrylates, polyester di(meth)acrylates, divinyl benzene, trivinyl benzene, triallyl cyanurate, allyl (meth)acrylate, butadiene, isoprene, etc. Further, examples of the acrylic rubbers may include core/shell-type polymers having a crosslinked diene-based rubber as a core portion.

Examples of the aromatic vinyl-based monomer contained in the above component (b-1) may include styrene, α-methyl styrene, t-butyl styrene, vinyl toluene, methyl-α-methyl styrene, divinyl benzene, diphenyl styrene, vinyl xylylene, etc. Among these aromatic vinyl-based monomers, preferred are styrene and α-methyl styrene.

Examples of the cyanided vinyl-based monomer contained in the above component (b-1) may include acrylonitrile, methacrylonitrile, crotonnitrile, cinnamnitrile, etc. Among these cyanided vinyl-based monomers, preferred are acrylonitrile and methacrylonitrile.

The above component (b-1) may be polymerized with the other monomer copolymerizable with the aromatic vinyl-based monomer and the cyanided vinyl-based monomer. Examples of the other monomer used in the component (b-1) may include (meth)acrylic acid alkyl ester compounds such as methyl acrylate, ethyl acrylate, propyl acrylate, butyl acrylate, amyl acrylate, 2-ethylhexyl acrylate, methyl methacrylate, ethyl methacrylate, propyl methacrylate, butyl methacrylate, amyl methacrylate and 2-ethylhexyl methacrylate; α,β-unsaturated acid glycidyl ester compounds such as glycidyl acrylate, glycidyl methacrylate and glycidyl ethacrylate; and maleimide-based compounds such as maleimide,

N-methyl maleimide, N-butyl maleimide and N-phenyl maleimide. Among these other monomers, preferred are (meth) acrylic acid alkyl ester compounds.

The contents of the respective components in the above component (b-1) are as follows. That is, the content of the rubber polymer component in the component (b-1) is usually 31 to 65% by weight and preferably 31 to 55% by weight; the content of the aromatic vinyl component in the above component (b-1) is usually 25 to 60% by weight and preferably 30 to 60% by weight; the content of the cyanided vinyl component in the above component (b-1) is usually 5 to 25% by weight and preferably 5 to 20% by weight; and the content of the other monomer component copolymerizable with these components in the above component (b-1) is usually 0 to 30% by weight and preferably 0 to 25% by weight. In addition, the weight ratio of the cyanided vinyl component to a sum of the aromatic vinyl component and the cyanided vinyl component is usually 10 to 45% by weight and preferably 15 to 40% by weight. Meanwhile, the components (b-1) may be used in combination of any two or more thereof.

Specific examples of the above component (b-1) may include ABS resins comprising styrene, butadiene and acrylonitrile; heat-resistant ABS resins obtained by replacing a part or majority of styrene in the ABS resins with α-methyl styrene or maleimide; (heat-resistant) AES resins or (heat-resistant) AAS resins obtained by replacing the butadiene in the ABS resins with an ethylene/propylene-based rubber or polybutyl acrylate; and (heat-resistant) ABS-based resins obtained by replacing the butadiene in the ABS resins with a silicone rubber or a silicon/acrylic composite rubber. Among these resins, preferred are ABS resins.

Aromatic vinyl/cyanided vinyl-based copolymer (b-2):

The aromatic vinyl/cyanided vinyl-based copolymer (b-2) used in the present invention is produced by polymerizing at least an aromatic vinyl-based monomer and a cyanided vinyl-based monomer, if required, further copolymerizing these monomers with the other monomer copolymerizable therewith, in the absence of a rubber polymer. Typical examples of the aromatic vinyl/cyanided vinyl-based copolymer (b-2) include AS resins comprising styrene and acrylonitrile.

Examples of the aromatic vinyl-based monomer, the cyanided vinyl-based monomer and the other monomer copolymerizable with these monomers may include those used in the above component (b-1).

The contents of the respective components in the component (b-2) are as follows. That is, the content of the aromatic vinyl component in the above component (b-2) is usually 45 to 90% by weight and preferably 45 to 80% by weight; the content of the cyanided vinyl component in the above component (b-2) is usually 5 to 50% by weight and preferably 10 to 45% by weight; and the content of the other monomer component copolymerizable with these components in the above component (b-2) is usually 0 to 30% by weight and preferably 0 to 25% by weight. In addition, the weight ratio of the cyanided vinyl component to a sum of the aromatic vinyl component and the cyanided vinyl component is usually 10 to 45% by weight and preferably 15 to 40% by weight. Meanwhile, the components (b-2) may be used in combination of any two or more thereof.

In the components (b-1) and (b-2) used in the present invention, the respective monomer units forming the components may be the same or different from each other.

Phosphorus-based flame retardant (c):

The phosphorus-based flame retardant (c) used in the present invention is made of a compound containing phosphorus in a molecule thereof. The phosphorus-based flame retardant is preferably a phosphorus-based compound represented by the following general formula (1) or (2).

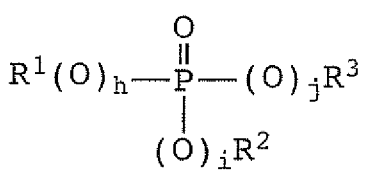

(1)

wherein $R^1$, $R^2$ and $R^3$ are respectively an alkyl group having 1 to 6 carbon atoms or an aryl group having 6 to 20 carbon atoms which may be substituted with an alkyl group; and h, i and j are respectively a number of 0 or 1.

The phosphorus-based compound represented by the above general formula (1) may be produced from phosphorus oxychloride, etc., by known methods. Specific examples of the phosphorus-based compound represented by the general formula (1) may include triphenyl phosphate, tricresyl phosphate, diphenyl-2-ethylcresyl phosphate, tri(isopropylphenyl) phosphate, diphenyl methyl phosphonate, diethyl phenyl phosphonate, diphenyl cresyl phosphate, tributyl phosphate, etc.

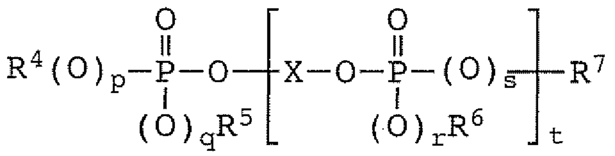

(2)

wherein $R^4$, $R^5$, $R^6$ and $R^7$ are respectively an alkyl group having 1 to 6 carbon atoms or an aryl group having 6 to 20 carbon atoms which may be substituted with an alkyl group; p, q, r and s are respectively a number of 0 or 1; t is an integer of 1 to 5; and X is an arylene group.

The phosphorus-based compound represented by the above general formula (2) is a condensed phosphoric acid ester in which t in the general formula (2) is 1 to 5. When using a mixture of the condensed phosphoric esters which are different in the value of t from each other, an average value of plural t's is determined as t of the mixture. In the general formula (2), X represents an arylene group. Examples of the arylene group may include divalent groups derived from dihydroxy compounds such as resorcinol, hydroquinone and bisphenol A.

Specific examples of the phosphorus-based compound represented by the general formula (2) may include phenyl-resorcin-polyphosphate, cresyl-resorcin-polyphosphate, phenyl-cresyl-resorcin-polyphosphate, xylyl-resorcin-polyphosphate, phenyl-p-t-butylphenyl-resorcin-polyphosphate, phenyl-isopropyl-phenyl-resorcin-polyphosphate, cresyl-xylyl-resorcin-polyphosphate, phenyl-isopropyl-phenyl-diisopropylphenyl-resorcin-polyphosphate, etc.

The phosphorus-based flame retardant (c) used in the present invention may comprise a phosphazen compound. The phosphazen compound may be at least one compound selected from the group consisting of cyclic phenoxy phosphazen compounds, chain-like phenoxy phosphazen compounds and crosslinked phenoxy phosphazen compounds.

<u>Fluorinated polyolefin (d):</u>

Examples of the fluorinated polyolefin used in the present invention may include polyfluoroethylenes. Among these polyfluoroethylenes, preferred is polytetrafluoroethylene having a fibril-forming property. The polytetrafluoroethylene tends to be readily dispersed in a polymer and cause molecules of the polymer to be bonded to each other therethrough to form a fibrous material. The polytetrafluoroethylene having a fibril-forming property is classified into three types according to ASTM standard. Examples of commercially available products of the polytetrafluoroethylene having a fibril-forming property may include "Teflon (registered trademark) 6J" and "Teflon (registered trademark) 30J" both produced by Mitsui-DuPont Fluorochemical Co., Ltd., and "Polyflon" (tradename) produced by Daikin Kogyo Co., Ltd.

<u>Inorganic filler (e):</u>

The inorganic filler (e) used in the present invention is not particularly limited, and there may be used all of ordinarily used inorganic fillers. Specific examples of the inorganic filler may include glass fibers, glass flakes, glass beads, milled glass, hollow glass, talc, clay, mica, carbon fibers, wollastonite, potassium titanate whiskers, titanium oxide whiskers, zinc oxide whiskers, etc. Among these inorganic fillers, from the standpoint of a good appearance of the obtained molded product, preferred are milled glass, talc, clay, wollastonite, etc., and more preferred is surface-untreated talc having a number-average particle diameter of not more than 9.0 $\mu$m as measured by a laser diffraction method in which the contents of Fe components and Al components are each not more than 0.5% by weight in terms of $Fe_2O_3$ and $Al_2O_3$, respectively.

The contents of the above essential and optional components in the aromatic polycarbonate resin composition of the present invention are as follows. In the following descriptions, the amounts of the aromatic polycarbonate resin (a), the rubber polymer/aromatic vinyl/cyanided vinyl-based copolymer (b-1) and the aromatic vinyl/cyanided vinyl-based copolymer (b-2) blended in the composition are based on 100% by weight of a total amount of these components (a), (b-1) and (b-2), whereas the amounts of the phosphorus-based flame retardant (c), the fluorinated polyolefin (d) and the inorganic filler (e) blended in the composition are based on 100 parts by weight of a total amount of these components (a), (b-1) and (b-2).

The amount of the aromatic polycarbonate resin (a) blended in the composition is 60 to 90% by weight and preferably 70 to 90% by weight. When the amount of the aromatic polycarbonate resin (a) blended in the composition is more than the above-specified upper limit, the resultant composition tends to be deteriorated in fluidity. When the amount of the aromatic polycarbonate resin (a) blended in the composition is less than the above-specified lower limit, the resultant composition tends to be deteriorated in heat resistance.

The amount of the rubber polymer/aromatic vinyl/cyanided vinyl-based copolymer (b-1) blended in the composition is 10 to 40% by weight and preferably 10 to 30% by weight. The amount of the aromatic vinyl/cyanided vinyl-based copolymer (b-2) blended in the composition is 0 to 35% by weight and preferably 0 to 25% by weight. When the amount of the respective components (b-1) and (b-2) blended in the composition is more than the above-specified upper limit, the resultant composition tends to be deteriorated in impact resistance. When the amount of the respective components (b-1) and (b-2) blended in the composition is less than the above-specified lower limit, the resultant composition tends to be deteriorated in fluidity.

The amount of the phosphorus-based flame retardant (c) blended in the composition is 10 to 40 parts by weight, preferably 10 to 30 parts by weight and more preferably 15 to 25 parts by weight. When the amount of the phosphorus-based flame retardant (c) blended is more than the above specified upper limit, the resultant composition tends to be deteriorated in mechanical properties. When the amount of the phosphorus-based flame retardant (c) blended is less than the above specified lower limit, the resultant composition tends to be insufficient in flame retardancy.

The amount of the fluorinated polyolefin (d) blended in the composition is 0 to 5 parts by weight, preferably 0.02 to 4 parts by weight and more preferably 0.03 to 3 parts by weight. When the amount of the fluorinated polyolefin (d) blended is more than the above specified upper limit, the molded product obtained from the resultant composition tends to be deteriorated in appearance.

The amount of the inorganic filler (e) blended in the composition is 0 to 50 parts by weight, preferably 1 to 40 parts by weight and more preferably 3 to 30 parts by weight. When the amount of the inorganic filler (e) blended is more than the above specified upper limit, the molded product obtained from the resultant composition tends to be deteriorated in appearance and impact strength.

The aromatic polycarbonate resin composition of the present invention may also contain, in addition to the above components (a) to (e), various additives for resins, if required, unless the addition thereof adversely affects the aimed effects of the present invention. Examples of the additives may include stabilizers (such as antioxidants and ultraviolet absorbers), mold release agents, lubricants, plasticizers, antistatic agents, sliding modifiers, fluidity modifiers, antibacterial agents, colorants (such as pigments and dyes), elastomers, compatibilizers, and other flame retardants, etc. These additives may be blended in the composition in such an amount that the addition thereof causes no deterioration in properties as required.

The method of producing the aromatic polycarbonate resin composition of the present invention is not particularly limited, and the aromatic polycarbonate resin composition may be produced by ordinary methods used for producing thermoplastic resin compositions. For example, the resin composition of the present invention may be produced by previously mixing the above respective raw components with each other using various mixers such as a tumbler and a Henschel mixer, and then melt-kneading the resultant mixture using a Banbury mixer, rolls, a Brabender, a single-screw kneading extruder, a twin-screw kneading extruder, a kneader, etc. Meanwhile, the components other than the resins may be directly fed to a mid portion of a kneader such as an extruder without being previously mixed with the resins.

Alternatively, the resin composition may be produced by previously melt-kneading a part of the raw components to prepare an intermediate composition, and then melt-kneading the resultant intermediate composition with the remaining other components. Further, the aimed resin composition may also be produced by preparing a master batch comprising a part of the raw components and then melt-kneading the thus obtained master batch with the remaining other components.

The most important feature of the aromatic polycarbonate resin composition of the present invention resides in that, in the aromatic polycarbonate resin composition as constructed above, the content of the rubber polymer component is 31 to 50% by weight on the basis of a total amount of the components (b-1) and (b-2), and the injection-molded product obtained from the aromatic polycarbonate resin composition satisfies the following relational formula (1):

$$Cpf/Cpc < 2 \qquad (1)$$

wherein Cpf is a notched Charpy impact strength in a direction parallel with a flow direction of the resin composition and Cpc is a notched Charpy impact strength in a direction perpendicular to a flow direction of the resin composition as measured according to JIS K7111.

That is, according to the present inventors' finding, when the above two requirements are satisfied, the thin-wall molded product obtained from the aromatic polycarbonate resin composition can exhibit a surface impact property and a flame retardancy as desired at the same time. The content of the rubber polymer component on the basis of a total amount of the components (b-1) and (b-2) is preferably 31 to 45% by weight, and the ratio of Cpf to Cpc (Cpf/Cpc) of the injection-molded product is less than 1.5.

The Charpy impact strength used in the present invention means the following measured value. That is, a test piece having a length of 80 mm and a width of 10 mm is cut from a central portion of the injection-molded product having a length of 100 mm, a width of 150 mm and a wall thickness of 2 mm in the directions parallel with and perpendicular to the resin flow direction. The test piece is notched, and then the notched test piece is subjected to impact test according to JIS K7111 to measure an impact strength thereof. Also, the injection-molded product is produced by using an injection molding machine "IS150" manufactured by Toshiba Machine Co., Ltd., under the conditions including a cylinder temperature of 240°C, a mold temperature of 60°C , an injection velocity of 100 mm/sec and a molding cycle of 40 sec.

It is considered that the surface impact strength has a close relation to a particle size and an orientation of domains formed by the respective components (b-1) and (b-2). The domains formed by the components (b-1) and (b-2) tend to be oriented in an elongated shape along the resin flow direction by the influence of shear force applied thereto upon molding. As a result, when forming the molded product, there tends to occur the difference between impact resistance values in the directions parallel with and perpendicular to the resin flow direction.

The small value of Cpf/Cpc in the above relational formula (1) means that an anisotropy of impact owing to orientation of the domains is small, i.e., the orientation of the domains in the direction parallel with the resin flow direction is low. Thus, when the orientation of the domains in the direction parallel with the resin flow direction is lowered, the anisotropy of impact can be reduced, and occurrence of cracks in the specific directions can be prevented. As a result, it is considered that the injection-molded product can be improved in surface impact property.

According to the present inventors' finding, when the content of the rubber polymer on the basis of a total amount of the components (b-1) and (b-2) is controlled to not less than 31% by weight, the domains formed by the components (b-1) and (b-2) tend to be finely dispersed upon the injection molding, so that the anisotropy of impact owing to the orientation of the domains can be reduced. In particular, when the above relational formula (1) is satisfied when subjected to Charpy impact test, the injection molded product hardly suffers from occurrence of cracks in the specific directions, and can be improved in surface impact property. On the other hand, when the content of the rubber polymer is more than 50% by weight, the injection-molded product tends to be deteriorated in flame retardancy at thin-wall portions thereof. Therefore, only in the case where the content of the rubber polymer lies in the range of 31 to 50% by weight and the above relational formula (1) is satisfied, it is possible to achieve both good surface impact property and good flame retardancy as required for actual thin-wall molded products at the same time.

The value of the ratio Cpf/Cpc may widely vary depending upon ratio between components in the resin composition, production conditions of the composition as well as kinds of the raw materials used and production methods therefor. However, the above relational formula (1) can be readily satisfied within the range of the composition as defined by the present invention, for example, by employing the following methods.

As the raw component (b-1), there is preferably used an acrylonitrile/butadiene/styrene (ABS) resin, and as the raw component (b-2), there is preferably used an acrylonitrile/styrene (AS) resin.

In the resin composition of the present invention, the content of the rubber polymer component (butadiene component) in the ABS resin and the AS resin is as high as 31 to 50% by weight. Therefore, even when the AN ratios in the ABS resin and the AS resin are substantially identical to each other, it is possible to prevent agglomeration of the domains formed by the components (b-1) and (b-2). As a result, the influence of the orientation of the domains can be lessened, thereby enabling the resin composition to exhibit a high surface impact property.

However, when the resin composition of the present invention is produced by melt-kneading the respective components using an extruder, from the viewpoint of a good compatibility of both the components (b-1) and (b-2), in particular, the difference in weight ratio of the acrylonitrile monomer to a sum of the styrene monomer and the acrylonitrile monomer between the components (b-1) and (b-2), i.e., the difference in "AN" ratio as defined below between these components, is more preferably sufficiently large.

$$\text{AN ratio} = (\text{acrylonitrile monomer})/(\text{styrene monomer} + \text{acrylonitrile monomer})$$

That is, in general, from the viewpoint of a good compatibility, the AN ratios of the ABS resin and the AS resin are substantially identical to each other. However, in the present invention, in the case where the ABS resin is used in combination with the AS resin whose AN ratio is sufficiently different from that of the ABS resin, the dispersibility of the domains can be further enhanced, so that a higher surface impact property can be exhibited.

The resin composition of the present invention is preferably produced by a melt-kneading method using a twin-screw extruder having a facility capable of removing volatile components through a vent port as a kneader. In order to improve a dispersibility of the respective components and allow these components to be stably kneaded together, the components other than the flame retardant (c), i.e., the components (a), (b-1) and (b-2) and the optional additives are preferably previously mixed with each other using a mixer such as a tumbler and a Henschel mixer. Upon the melt-kneading, it is effective to add the flame retardant (c) to a block located at a mid portion of the extruder through various pumps such as a gear pump and a plunger pump by using the conditions including a barrel temperature of 200 to 350°C and a screw rotating speed of 50 to 1000 rpm.

Within the range of the resin composition as defined by the present invention, the above relational formula (1) can be satisfied by adopting any of the above conditions or combining a plurality of the conditions with each other. As

a result, a molded product, in particular, a thin-wall molded product having a thickness of not more than 1.5 mm, which is obtained from the aromatic polycarbonate resin composition of the present invention, can exhibit both a high surface impact strength and a high flame retardancy at the same time.

The aromatic polycarbonate resin composition of the present invention can be formed into various molded products used in the application fields such as OA equipments and domestic appliances, electric and electronic communication, computers, sundries and vehicles, by various molding methods generally used for thermoplastic resin compositions, i.e., such as injection molding, blow molding, extrusion molding, sheet forming, vacuum forming, profile forming, foam molding compression molding, injection compression molding, blow molding rotational, molding and laminate molding. In particular, the aromatic polycarbonate resin composition of the present invention is useful for producing a large-size molded products or thin-wall molded products by an injection molding method, because of excellent fluidity and surface impact property thereof.

The aromatic polycarbonate resin composition of the present invention can exhibit an excellent surface impact property, in particular, when formed into an injection-molded product with portions having a resin thickness of not more than 1.5 mm. In addition, even the actual molded products having the above small resin thickness can exhibit a sufficient flame retardancy as required therefor. Accordingly, the aromatic polycarbonate resin composition of the present invention can be suitably used as a raw material for various molded products in various application fields such as OA equipments and domestic appliances, electric and electronic communication, computers, sundries and vehicles.

## EXAMPLES

The present invention is described in more detail by the following Examples. However, these Examples are only illustrative and not intended to limit a scope of the present invention. Meanwhile, the raw materials used in Examples and Comparative Examples are as follows.

Aromatic polycarbonate resin (a):

Poly-4,4-isopropylidene diphenyl carbonate ["IUPILON (registered trademark) S-2000" produced by Mitsubishi Engineering-Plastics Corporation; viscosity-average molecular weight: 25000]

Component (b-1) (ABS resin-1):

Acrylonitrile/butadiene/styrene copolymer ["CHT" (tradename) produced by Nippon Samsung Co., Ltd.; butadiene content: 58% by weight; AN ratio = 22% by weight]

Component (b-1) (ABS resin-2):

Acrylonitrile/butadiene/styrene copolymer ["AT-08" (tradename) produced by Nippon A & L Co., Ltd.; butadiene content: 17% by weight; AN ratio = 25% by weight]

Component (b-2) (AS resin-1):

Acrylonitrile/styrene copolymer ["SAN-C" (tradename) produced by Techno Polymer Co., Ltd.; AN ratio = 26% by weight]

Component (b-2) (AS resin-2):

Acrylonitrile/styrene copolymer ["SAN-FF" (tradename) produced by Techno Polymer Co., Ltd.; AN ratio = 24% by weight]

Flame retardant (c):

Condensed phosphoric acid ester represented by the following formula (3) wherein $t_1$ = 1.1 ["ADK STAB FP-700" (tradename) produced by ADEKA Corporation]

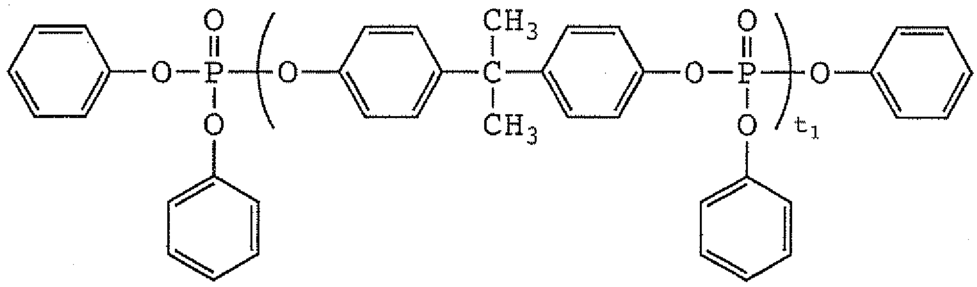

(3)

Fluorinated polyolefin (d):

Polytetrafluoroethylene ["TEFLON (registered trademark) 6J" produced by Mitsui DuPont Fluorochemical Co., Ltd.]

Inorganic filler (e):

Talc (number-average particle diameter: 2.8 μm; surface-untreated product) ["MICRON-WHITE 5000S" (tradename) produced by Hayashi Kasei Co., Ltd.]

Mold release agent:

Pentaerythritol tetrastearate ["VPG861" (tradename) produced by Cognis Inc.]

Stabilizer:

Tris(2,4-di-tert-butylphenyl)phosphite "ADK STAB 2112" (tradename) produced by ADEKA Corporation]

Examples 1 to 5 and Comparative Examples 1 to 5:

The respective components except for the phosphorus-based flame retardant were blended together at the weight ratios shown in Tables 1 and 2, and mixed with each other using a tumbler for 20 min. Thereafter, the resultant mixture was kneaded and extruded into strands using a twin-screw extruder "TEX30HSST" manufactured by the Japan Steel Works, LTD., by setting the barrel temperature to the following predetermined value, the screw rotating speed to 250 rpm and the extrusion speed to 20 kg/hr. Then, the thus extruded strands were cut to form pellets. The barrel temperature used in Examples and Comparative Examples except for Comparative Example 5 was 250°C, and that used in Comparative Example 5 was 360°C. The phosphorus-based flame retardant was heated to 80°C, and then added to the 3rd block from a hopper side through a gear pump. Using the thus obtained pellets, the following tests were respectively conducted. The results are shown in Tables 1 and 2.

[Falling weight impact test]

The obtained pellets were dried at 80°C for 5 hr, and then injection-molded using an injection molding machine "IS150" manufactured by Toshiba Machine Co., Ltd., at a cylinder temperature of 240°C, a mold temperature of 60°C, an injection speed of 100 mm/sec and a mold cycle of 40 sec, thereby obtaining a molded product having a length of 100 mm, a width of 150 mm and a wall thickness of 1.2 mm or 2 mm. The thus obtained molded product was subjected to falling weight impact test according to JIS K7211.

[Charpy impact test]

The obtained pellets were dried at 80°C for 5 hr, and then injection-molded using an injection molding machine "IS150" manufactured by Toshiba Machine Co., Ltd., at a cylinder temperature of 240°C, a mold temperature of 60°C, an injection speed of 100 mm/sec and a mold cycle of 40 sec, thereby obtaining a molded product having a length of 100 mm, a width of 150 mm and a wall thickness of 2 mm. The thus obtained molded product was cut in the directions parallel with and perpendicular to the resin flow direction, thereby obtaining a test piece having a length of 80 mm and a width of 10 mm. The thus obtained test piece was notched and then subjected to Charpy impact test according to JIS

K7111.

[Combustion test]

The obtained pellets were dried at 80°C for 5 hr, and then injection-molded using an injection molding machine "J50" manufactured by Japan Steel Works, LTD., at a cylinder temperature of 250°C, a mold temperature of 60°C, an injection speed of 100 mm/sec and a mold cycle of 45 sec, thereby obtaining a test piece for combustion test having a length of 127 mm, a width of 12.7 mm and a wall thickness of 0.8 mm. The combustibility of the thus obtained test piece was evaluated according to UL94 Standard. In Table 2, "NG" means that the test piece failed to conform to the requirement for combustibility as prescribed in UL94 Standard.

Table 1

| | Unit | Examples | | | | |
|---|---|---|---|---|---|---|
| | | 1 | 2 | 3 | 4 | 5 |
| Components | | | | | | |
| (a) Polycarbonate | wt% | 80 | 80 | 80 | 80 | 80 |
| (b-1) ABS-1: CHT | wt% | 7 | 14 | 14 | 11 | 11 |
| (b-1) ABS-2: AT-08 | wt% | 13 | - | - | 9 | 9 |
| (b-2) A-1: SAN-C | wt% | - | 6 | - | - | - |
| (b-2) AS-2: SAN-FF | wt% | - | - | 6 | - | - |
| (c) Phosphorus-based flame retardant | wt part | 18 | 18 | 18 | 18 | 18 |
| (d) Fluorinated polyolefin | wt part | 0.5 | 0.5 | 0.5 | 0.5 | 0.5 |
| (e) Inorganic filler | wt part | - | - | - | - | 15 |
| Mold release agent | wt part | 0.3 | 0.3 | 0.3 | 0.3 | 0.3 |
| Stabilizer | wt part | 0.1 | 0.1 | 0.1 | 0.1 | 0.1 |
| Butadiene content based on sum of (b-1) and (b-2) | wt% | 31 | 41 | 41 | 40 | 40 |
| Barrel temperature | °C | 250 | 250 | 250 | 250 | 250 |
| Properties | | | | | | |
| Notched Charpy impact strength in direction parallel with resin flow (Cpf) | $kJ/m^2$ | 68 | 68 | 62 | 66 | 30 |
| Notched Charpy impact strength in direction perpendicular to resin flow (Cpc) | $kJ/m^2$ | 42 | 47 | 41 | 45 | 25 |
| Cpf/Cpc | - | 1.6 | 1.4 | 1.5 | 1.5 | 1.2 |
| Falling weight impact strength | | | | | | |
| Wall thickness: 1.2 mm | J | 17 | 20 | 19 | 20 | 10 |
| Wall thickness: 2.0 mm | J | - | - | - | 48 | - |
| Flame retardancy (UL94) | - | V-0 | V-0 | V-0 | V-0 | V-0 |

Table 2

| | Unit | Comparative Examples | | | | |
|---|---|---|---|---|---|---|
| | | 1 | 2 | 3 | 4 | 5 |
| Components | | | | | | |
| (a) Polycarbonate | wt% | 80 | 70 | 80 | 60 | 80 |
| (b-1) ABS-1: CHT | wt% | 9 | 13 | 20 | 22 | 7 |

(continued)

| Components | | | | | | |
|---|---|---|---|---|---|---|
| (b-1) ABS-2: AT-08 | wt% | - | - | - | - | 13 |
| (b-2) AS-1: SAN-C | wt% | 11 | 17 | - | 18 | - |
| (b-2) AS-2: SAN-FF | wt% | - | - | - | - | - |
| (c) Phosphorus-based flame retardant | wt part | 18 | 18 | 18 | 18 | 18 |
| (d) Fluorinated polyolefin | wt part | 0.5 | 0.5 | 0.5 | 0.5 | 0.5 |
| (e) Inorganic filler | wt part | - | - | - | - | - |
| Mold release agent | wt part | 0.3 | 0.3 | 0.3 | 0.3 | 0.3 |
| Stabilizer | wt part | 0.1 | 0.1 | 0.1 | 0.1 | 0.1 |
| Butadiene content based on sum of (b-1) and (b-2) | wt% | 26 | 25 | 58 | 32 | 31 |
| Barrel temperature | °C | 250 | 250 | 250 | 250 | 360 |
| Properties | | | | | | |
| Notched Charpy impact strength in direction parallel with resin flow (Cpf) | $kJ/m^2$ | 64 | 70 | 64 | 55 | 19 |
| Notched Charpy impact strength in direction perpendicular to resin flow (Cpc) | $kJ/m^2$ | 18 | 7 | 53 | 20 | 8 |
| Cpf/Cpc | - | 3.6 | 10 | 1.2 | 2.8 | 2.4 |
| Falling weight impact strength | | | | | | |
| Wall thickness: 1.2 mm | J | 5 | 5 | 20 | 6 | 5 |
| Wall thickness: 2.0 mm | J | 37 | - | - | - | - |
| Flame retardancy (UL94) | - | V-0 | V-0 | NG | V-0 | V-2 |

The following results were confirmed from Tables 1 and 2. That is, when the butadiene contents in the ABS resin and the AS resin were in the range of 31 to 50% by weight and the ratio Cpf/Cpc was less than 2, the resultant compositions maintained a flame retardancy of V-0 level and exhibited a good surface impact property. On the other hand, when the butadiene contents in the ABS resin and the AS resin were less than 31% by weight, the resultant compositions exhibited a low falling weight impact strength (Comparative Examples 1 and 2). Even though the butadiene contents in the ABS resin and the AS resin were not less than 31% by weight, when the ratio Cpf/Cpc was not less than 2, the resultant composition was deteriorated in surface impact property (Comparative Example 4). In addition, when the butadiene contents in the ABS resin and the AS resin were more than 50% by weight, the resultant composition failed to show a sufficient flame retardancy (Comparative Example 3). Further, when the barrel temperature was too high upon production of the resin composition, the ratio Cpf/Cpc was not less than 2, thereby causing deterioration in both of a surface impact property and a flame retardancy of the resultant resin composition (Comparative Example 5).

## Claims

**1.** An aromatic polycarbonate resin composition comprising:
100 parts by weight of a mixture comprising 60 to 90% by weight of an aromatic polycarbonate resin (a), 10 to 40% by weight of a rubber polymer/aromatic vinyl/cyanided vinyl-based copolymer (b-1) and 0 to 35% by weight of an aromatic vinyl/cyanided vinyl-based copolymer(b-2);
10 to 40 parts by weight of (c) a phosphorus-based flame retardant;
0 to 5 parts by weight of (d) a fluorinated polyolefin; and
0 to 50 parts by weight of an inorganic filler (e),
a content of the rubber polymer component being 31 to 50% by weight on the basis of a total amount of the components (b-1) and (b-2), and which aromatic polycarbonate resin composition has such a property that an injection-molded product obtained from the aromatic polycarbonate resin composition satisfies the following relational formula (1):

$$Cpf/Cpc < 2 \qquad (1)$$

wherein Cpf is a notched Charpy impact strength in a direction parallel with a flow direction of the resin composition; and Cpc is a notched Charpy impact strength in a direction perpendicular to a flow direction of the resin composition as measured according to JIS K7111.

**2.** An aromatic polycarbonate resin composition according to claim 1, wherein the component (b-1) is an acrylonitrile/butadiene/styrene copolymer and the component (b-2) is an acrylonitrile/styrene copolymer.

**3.** An aromatic polycarbonate resin composition according to claim 1 or 2, wherein the aromatic polycarbonate resin (a) has a viscosity-average molecular weight of 16,000 to 30,000.

**4.** An aromatic polycarbonate resin composition according to any one of claims 1 to 3, wherein the phosphorus-based flame retardant (c) is a phosphorus-based compound represented by the following general formula (1) or (2):

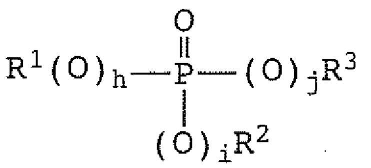

(1)

wherein $R^1$, $R^2$ and $R^3$ are respectively an alkyl group having 1 to 6 carbon atoms or an aryl group having 6 to 20 carbon atoms which may be substituted with an alkyl group; and h, i and j are respectively a number of 0 or 1; or

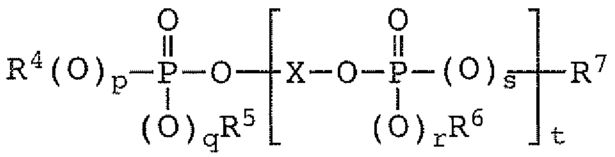

(2)

wherein $R^4$, $R^5$, $R^6$ and $R^7$ are respectively an alkyl group having 1 to 6 carbon atoms or an aryl group having 6 to 20 carbon atoms which may be substituted with an alkyl group; p, q, r and s are respectively a number of 0 or 1; t is an integer of 1 to 5; and X is an arylene group.

**5.** An aromatic polycarbonate resin composition according to any one of claims 1 to 4, wherein the inorganic filler (e) is talc.

**6.** A molded product obtained by injection-molding the aromatic polycarbonate resin composition as defined in any one of claims 1 to 5.

**7.** A molded product according to claim 6, wherein the molded product has a portion having a thickness of not more than 1.5 mm.

**INTERNATIONAL SEARCH REPORT**

International application No.
PCT/JP2006/323410

A. CLASSIFICATION OF SUBJECT MATTER
*C08L69/00*(2006.01)i, *C08K5/51*(2006.01)i, *C08L51/04*(2006.01)i

According to International Patent Classification (IPC) or to both national classification and IPC

B. FIELDS SEARCHED

Minimum documentation searched (classification system followed by classification symbols)
C08L69/00, C08K5/51, C08L51/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPIL(QWEB)

C. DOCUMENTS CONSIDERED TO BE RELEVANT

| Category* | Citation of document, with indication, where appropriate, of the relevant passages | Relevant to claim No. |
|---|---|---|
| X | JP 2003-183490 A (Asahi Kasei Corp.), 03 July, 2003 (03.07.03), Claims; Par. Nos. [0002], [0053], [0103], [0116], [0117]; examples 3, 4 (Family: none) | 1-7 |
| X | JP 2002-20611 A (Toray Industries, Inc.), 23 January, 2002 (23.01.02), Claims; Par. Nos. [0024], [0095], [0097]; examples 1 to 4 (Family: none) | 1-7 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 December, 2006 (22.12.06) | 09 January, 2007 (09.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/323410

C (Continuation). DOCUMENTS CONSIDERED TO BE RELEVANT

| Category* | Citation of document, with indication, where appropriate, of the relevant passages | Relevant to claim No. |
|---|---|---|
| X | JP 9-87466 A (Asahi Chemical Industry Co., Ltd.), 31 March, 1997 (31.03.97), Claims; Par. Nos. [0012], [0097], [0124], [0137]; examples 1 to 22 (Family: none) | 1-7 |
| A | JP 7-316411 A (Mitsubishi Chemical Corp.), 05 December, 1995 (05.12.95), Claims; Par. No. [0016]; examples 1 to 3 (Family: none) | 1-7 |
| A | JP 2003-213144 A (Teijin Kasei Kabushiki Kaisha), 30 July, 2003 (30.07.03), Claims; Par. No. [0133] (Family: none) | 1-7 |
| A | JP 2003-41114 A (Asahi Kasei Corp.), 13 February, 2003 (13.02.03), Claims; Par. No. [0116] (Family: none) | 1-7 |
| A | JP 2003-41112 A (Asahi Kasei Corp.), 13 February, 2003 (13.02.03), Claims; Par. No. [0129] (Family: none) | 1-7 |
| A | JP 2002-540277 A (Bayer AG.), 26 November, 2002 (26.11.02), Claims & WO 2000/58395 A & EP 2000/58395 A & EP 1169385 B & US 6767943 B | 1-7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005507445 A
- JP 11199768 A